# EUROPEAN PATENT SPECIFICATION

(11) **EP 3 106 773 B1**
(45) Date of publication and mention of the grant of the patent: **09.05.2018**
(21) Application number: 14881694.5
(22) Date of filing: 10.02.2014
(51) Int. Cl.: F24H 1/00, F24F 11/02, F25B 47/02, F24H 4/02, F25B 13/00, F24D 17/02, F24D 19/00, F25B 49/02, F25B 5/02

(54) **HEAT PUMP HOT WATER SUPPLY DEVICE**
WÄRMEPUMPENARTIGE WARMWASSERVERSORGUNGSVORRICHTUNG
DISPOSITIF D'ALIMENTATION EN EAU CHAUDE D'UNE POMPE À CHALEUR

(43) Date of publication of application: 21.12.2016
(73) Proprietor: Mitsubishi Electric Corporation, Chiyoda-ku Tokyo 100-8310 (JP)
(72) Inventor: KADOWAKI, Kimitaka, Tokyo 100-8310 (JP); YAMANO, Yoshio, Tokyo 100-8310 (JP)
(74) Representative: Moore, Graeme Patrick
(86) International application number: PCT/JP2014/000701
(87) International publication number: WO 2015/118580

(56) References cited:
- EP-A1- 1 975 525
- EP-A1- 2 527 751
- EP-A2- 2 314 957
- JP-A- H03 286 978
- JP-A- S62 261 862
- JP-A- 2008 170 015
- JP-A- 2010 181 104
- JP-A- 2011 122 735
- JP-A- 2013 024 485
- JP-A- 2013 053 758
- JP-A- 2013 096 661
- JP-A- 2013 137 192

## Description

### Technical Field

This invention relates to heat-pump hot-water supply apparatuses that supply hot water by using a heat pump and, more particularly, to a heat-pump hot-water supply apparatus configured to achieve defrosting with an elongated interval between the defrosting operations in a heating operation.

### Background Art

With growing concerns at energy issues, heat pumps have recently attracted attention as a clue to efficient utilization of renewable energy. In particular, heat pumps for water heaters, which obtain hot water of 60 degrees C or higher, are capable of performing a highly efficient operation by utilizing heat in the ambient air. Accordingly, heat-pump hot-water supply apparatuses are expected to be an alternative to the boiler technology.

The aforementioned heat-pump hot-water supply apparatuses that use air as a heat source need to frequently perform a defrosting operation, such as hot-gas defrosting, when the outdoor air temperature is in a certain range since an air heat exchanger is covered with a large amount of frost, for example, at around 0 degrees C, (see, for example, Patent Literature 1).

Heat-pump-type hot-water supply apparatuses often include a hot-water storage tank. In such cases, the heat pump stops operating when the degree of temperature in the hot-water storage tank reaches a preset value. Unlike combustion-type boilers, the heat-pump hot-water supply apparatuses are capable of supplying hot water by using hot water stored in the tank even when the apparatuses are not operating.

Accordingly, if heat-pump hot-water supply apparatuses can start a defrosting operation after raising the temperature in the hot-water storage tank to a certain temperature, the hot-pump-type hot-water supply apparatuses can avoid running out of hot water. Thus, to avoid being out of hot water during a period when a water heating load is high, an interval between defrosting operations needs to be extended as much as possible.

EP2527751A1 discloses a heat-pump hot-water supply apparatus according to the preamble of claim 1. JPS62261862A discloses a heat pump system having a hot water supply operation function.

### Citation List

### Patent Literature

Patent Literature 1: Japanese Unexamined Patent Application Publication No. 2010-181104

### Summary of Invention

### Technical Problem

If the outdoor air temperature is low (approximately 5 degrees C to -5 degrees C) when the aforementioned heat-pump hot-water supply apparatuses are operating, an air heat exchanger installed outdoors is frosted. Thus, a defrosting operation is needed. Since, in general, the saturation water vapor pressure in the air decreases as the outdoor air temperature decreases, the amount of frost at the air heat exchanger decreases accordingly. In addition, if the outdoor air temperature is a certain temperature (for example, 5 degrees C) or higher, the temperature of the air heat exchanger is less likely to become 0 degrees C or lower. Thus, the amount of frost at the air heat exchanger decreases accordingly.

If there are parts where the airflow rate is uneven, the air heat exchanger exchanges a large amount of heat at a part where the airflow rate is high. Thus, the amount of frost increases. If the air heat exchanger becomes frosted, the frost serves as thermal resistance, which tends to lower the evaporating pressure and consequently leads to a decrease in efficiency and a shorter defrosting-operation interval.

Conventional heat-pump hot-water supply apparatuses perform control to increase the rotation speed of a compressor in response to a decrease in the outdoor air temperature. However, if the rotation speed of the compressor is simply increased in response to a decrease in the outdoor air temperature, the amount of frost at the air heat exchanger increases. This is the case where, for example, the compressor is operated at a high rotation speed when the temperature is low but the saturation water vapor pressure is relatively high, that is, when the outdoor air temperature is a temperature (approximately, 5 degrees C to -5 degrees C) at which frosting is likely to occur at the air heat exchanger,.

As the amount of frost at the air heat exchanger increases, a defrosting operation needs to be frequently performed. As a result, a heating operation and a defrosting operation are frequently switched therebetween, making the heating operation inefficient in some cases.

This invention is made to overcome the issues described above and aims to provide a heat-pump hot-water supply apparatus capable of performing an efficient operation while suppressing the amount of frost at an air heat exchanger. Solution to Problem

To this end, a heat-pump hot-water supply apparatus according to claim 1 is provided.

### Advantageous Effects of Invention

The heat-pump hot-water supply apparatus according to this invention controls an operation by selecting a heat exchanger that is supplied with refrigerant, in accordance with a detected evaporating temperature or evaporator outlet temperature and a detected outdoor air temperature. Accordingly, the heat-pump hot-water supply apparatus is capable of performing an efficient operation while suppressing the amount of frost at the air heat exchanger by appropriately controlling a heat exchanger used, in accordance with the operating state thereof.

Since the heat-pump hot-water supply apparatus is capable of making the amount of frost at the air heat exchanger even and utilizing the area of the air heat exchanger as efficiently as possible particularly at outdoor air temperatures at which a defrosting operation is needed, such as outdoor air temperatures of around 0 degrees C at which frosting progresses, the frequency with which a defrosting operation is performed decreases and the operation can be performed in a state where the evaporating temperature of the system is set as high as possible. Thus, the heat-pump hot-water supply apparatus is able to operate more efficiently while appropriately performing a defrosting operation. Brief Description of Drawings

[Fig. 1] Fig. 1 is a diagram illustrating a schematic configuration of a heat-pump hot-water supply apparatus according to Embodiment of this invention.
[Fig. 2] Fig. 2 is a block diagram illustrating a configuration of a control system of the heat-pump hot-water supply apparatus according to Embodiment of this invention.
[Fig. 3] Fig. 3 is a diagram describing transition of the operating state of an air heat exchanger.
[Fig. 4] Fig. 4 is a diagram describing a difference in operation control between a conventional heat-pump hot-water supply apparatus and the heat-pump hot-water supply apparatus according to this invention. Description of Embodiments

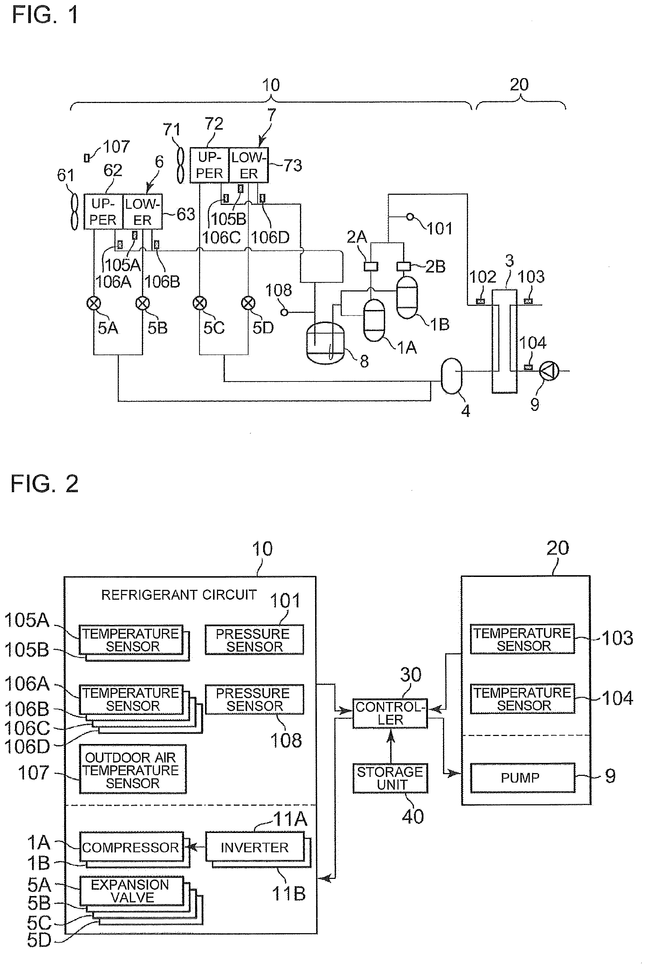

A heat-pump hot-water supply apparatus according to this invention will be described below with reference to the drawings. Fig. 1 illustrates a schematic configuration of a heat-pump-type cycle apparatus according to this invention. Fig. 2 illustrates a configuration of a control system of the apparatus.

The heat-pump hot-water supply apparatus of Embodiment includes a refrigerant circuit 10 for extracting heat and a water circuit 20 for heating water. The refrigerant circuit 10 includes compressors 1A and 1B, four-way valves 2A and 2B, a water heat exchanger 3 configured to perform heat exchange between refrigerant and water, a refrigerant tank 4, expansion valves 5A, 5B, 5C, and 5D, air heat exchangers 6 and 7 serving as heat exchangers for extracting heat, and an accumulator 8. These members are connected in the aforementioned order by a flow passage. In addition, the refrigerant circuit 10 is configured such that a refrigerant circulation direction is switched by using the four-way valves 2A and 2B.

The air heat exchanger 6 is partitioned into two portions and includes a fan 61 configured to force air to move, a first heat exchanger 62 having a high airflow rate of an airflow generated by the fan 61, and a second heat exchanger 63 having a low airflow rate of an airflow generated by the fan 61. The heat exchangers 62 and 63 are connected to the expansion valves 5A and 5B through corresponding branch flow passages, respectively. Note that, by partitioning the air heat exchanger 6 into two portions, advantageous effects such as efficient utilization of a heat exchanger having a small distribution of the refrigerant can be obtained.

In Embodiment, as the air heat exchanger 6, a heat exchanger including the fan 61 disposed above a casing having a rectangular parallelepiped shape, the first heat exchanger 62 disposed in an upper portion of the casing, and the second heat exchanger 63 disposed in a lower portion of the casing is used.

The air heat exchanger 7 has a configuration similar to that of the air heat exchanger 6. The air heat exchanger 7 includes a fan 71, a first heat exchanger 72 disposed in an upper portion, and a second heat exchanger 73 disposed in a lower portion. As in the air heat exchanger 6, the heat exchangers 72 and 73 are connected to the expansion valves 5C and 5C by corresponding branch flow passages, respectively.

A temperature sensor 102 configured to detect refrigerant temperature is installed at an inlet of the water heat exchanger 3. In addition, an outdoor air temperature sensor 107 configured to detect outdoor air temperature is installed near the air heat exchangers 6 and 7.

A temperature sensor 105A configured to detect refrigerant temperature is installed at an inlet of the heat exchanger 63 of the air heat exchanger 6. Temperature sensors 106A and 106B configured to detect refrigerant temperature are installed at corresponding outlets of the heat exchangers 62 and 63 so that the temperature sensors 106A and 106B correspond to the expansion valves 5A and 5B, respectively.

A temperature sensor 105B configured to detect refrigerant temperature is installed at an inlet of the heat exchanger 73 of the air heat exchanger 7. Temperature sensors 106C and 106D configured to detect refrigerant temperature are installed at corresponding outlets of the heat exchangers 72 and 72 so that the temperature sensors 106C and 106D correspond to the expansion valves 5C and 5D, respectively.

Further, a pressure sensor 101 configured to detect condensing pressure is installed on a discharge side of the compressors 1A and 1B (between the four-way valves 2A and 2B and the water heat exchanger 3). A pressure sensor 108 configured to detect evaporating pressure is installed on an outlet side of the air heat exchangers 6 and 7 (between the air heat exchangers 6 and 7 and the accumulator 8).

A pump 9 is connected to the flow passage on the inlet side of the water heat exchanger 3 that constitutes a water circuit 12. Water fed from a water inlet by an operation of the pump 9 absorbs heat from the refrigerant at the water heat exchanger 3 to become hot water, and the hot water is supplied to a load from a water outlet. A temperature sensor 104 configured to detect inlet water temperature and a temperature sensor 103 configured to detect outlet water temperature are installed at the inlet and the outlet of the water heat exchanger 3, respectively.

The heat-pump hot-water supply apparatus according to Embodiment includes a controller configured to record temperatures detected by the temperature sensors and pressures detected by the pressure sensors or configured to control driving of the compressors 1A and 1B, the four-way valves 2A and 2B, and the expansion valves 5A, 5B, 5C, and 5D in response to an operation request given by a user using a device, such as a remote control not illustrated.

Fig. 2 illustrates a configuration of a control system of the heat-pump hot-water supply apparatus. A controller 30 controls rotation speeds of the compressors 1A and 1B and opening degrees of the expansion valves 5A to 5D of the refrigerant circuit 10. The controller 30 further controls an operation of the pump 9 of the water circuit 20.

Specifically, the controller 30 controls output frequencies of inverters 11A and 11B of the refrigerant circuit 10 to control the rotation speeds of the compressors 1A and 1B, respectively. Control values of the rotation speeds of the compressors 1A and 1B are calculated based on comparison of a temperature difference between a temperature requested by the user using a device, such as a remote control, and the water temperature 103 on the outlet side of the water heat exchanger 3. Values obtained by correcting a maximum compressor rotation speed table stored in a storage unit 40 on the basis of the calculation result are used as the rotation speeds of the compressors 1A and 1B.

Note that the refrigerant circuit in a heating operation alone is illustrated in Fig. 1 and illustrations of the refrigerant circuit and the refrigerant flow direction in a defrosting operation are omitted. In a defrosting operation, however, the refrigerant flow direction is opposite to that in a heating operation. In addition, the refrigerant circuit 10 includes two air heat exchangers 6 and 7 in Fig. 1. This configuration is made by taking requested heating conditions into account. If the heating conditions are not severe, the refrigerant circuit may include one air heat exchanger.

Operation actions of the heat-pump hot-water supply apparatus having the above-described configuration will be described next by using the case of performing a heating operation as an example. When the user operates a device, such as a remote control, to switch on a start switch, the hot-water supply apparatus starts operating.

The compressors 1A and 1B are controlled so that current water temperature detected by the water temperature sensor 103, that is, temperature of water heated at the water heat exchanger 3, becomes equal to a water temperature corresponding to a set temperature that is a target temperature set by the user for the heating operation. The refrigerant that has changed into high-temperature high-pressure gas by the compressors 1A and 1B passes through the four-way valves 2A and 2B, transfers heat at the water heat exchanger 3 to liquefy, and is temporarily stored in the refrigerant tank 4. The pressure of the refrigerant is then reduced by the expansion valves 5A, 5B, 5C, and 5D, and the refrigerant evaporates at the air heat exchangers 6 and 7 to exchange heat with outdoor air, and the gas refrigerant is compressed by the compressors 1A and 1B again. Such a process is repeated.

In the case where the refrigerant circuit 10 includes an injection mechanism, injection is sometimes enabled in the case where a high water temperature is requested when the outdoor air temperature is low during a heating operation. In such a case, the refrigerant is injected to the mechanism portions of the compressors 1A and 1B, and consequently the discharge temperature at the compressors 1A and 1B decreases and the amount of circulating refrigerant at the water heat exchanger 3 increases. Accordingly, even in the case where a high water temperature is requested when the outdoor air temperature is low, a high heating capacity can be exerted by increasing the refrigerant flow rate at the water heat exchanger 3.

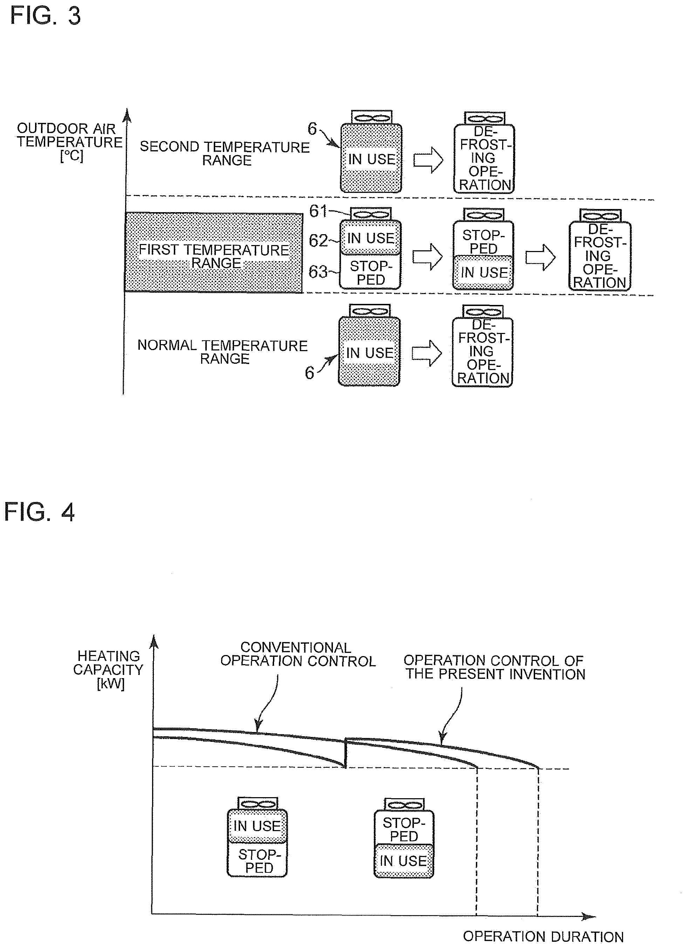

The control principle of the heat-pump hot-water supply apparatus according to this invention will be described next with reference to Fig. 1 described above and Fig. 3. Fig. 3 is a diagram illustrating transition of the operating state of the air heat exchanger.

As described above, in this invention, an air heat exchanger whose air heat exchanger portion is partitioned into a plurality of portions, specifically, an air heat exchanger including a plurality of heat exchangers that have different airflow rates of air passing therethrough and that are connected to respective expansion valves, is used as the air heat exchanger.

In Embodiment, the description will be given on the assumption that the air heat exchangers 6 and 7 each include the minimum number of partitioned potions, that is, two heat exchangers. In addition, for ease of explanation, Fig. 3 illustrates the air heat exchanger 6 alone.

A method for partitioning a heat exchanger is as follows. For example, in the case where the heat exchange efficiency varies due to a difference in the airflow rate of air that passes through the heat exchanger, the heat exchanger is partitioned into a portion having a high heat exchange efficiency and a portion having a low heat exchange efficiency. Fig. 3 illustrates the air heat exchanger including the blower fan disposed above a casing having a rectangular parallelepiped shape and heat exchangers disposed in upper and lower portions of the casing. Because of the positional relationship with the fan, the airflow rate of air that passes through the upper heat exchanger is higher than the airflow rate of air that passes through the lower heat exchanger.

Referring to Fig. 3, transition of the operating state of the air heat exchanger 6 will be described. If the outdoor air temperature is in a first temperature range, in which a defrosting operation is frequently performed, at the start of the operation, control is performed to activate the expansion valve (for example, the expansion valve 5A in this case) connected to a refrigerant pipe that is connected to the high-heat-exchange-efficiency portion of the air heat exchanger 6, from among the expansion valves 5A and 5B, and the expansion valve 5B is fully closed to be in a non-operating state as illustrated in the central part of Fig. 3. At that time, since the upper heat exchanger 62 alone is in use, the heat transfer area of the air heat exchanger 6 is a half the heat transfer area of the normal operation. However, a decrease in the operation efficiency is prevented by using only the portion having a high heat exchange efficiency.

In the case where a conventional air heat exchanger is used in which the heat exchangers are not separated, frost locally increases due to a difference in heat exchange efficiency between the heat exchange portions and hinders heat exchange from being performed, and a degree of superheat decreases at the outlet of the heat exchanger. As a result, a defrosting operation is started in a state where the heat transfer area of the air heat exchanger is not sufficiently usable. In contrast, since the above-described control for alternately using and stopping using the heat exchangers 62 and 63 enables the heat transfer area to be sufficiently used by forcedly changing the refrigerant flow passage, a defrosting operation is less likely to be started. In addition, since the area of the air flow passage of the heat exchanger decreases because of frosting, the wind velocity increases, which increases the heat exchange efficiency and can consequently improve the operation efficiency.

On the other hand, if the outdoor air temperature is as high as 5 degree C or above, the temperature of the air heat exchanger 6 is less likely to become 0 degrees C or lower. Thus, frosting is less likely to occur at an outdoor heat exchanger 5. In addition, if the outdoor air temperature is as low as -5 degrees C or below, the saturation water vapor pressure is low. Thus, frosting is less likely to occur at the outdoor heat exchanger 5. That is, the defrosting operation is performed less frequently in a second temperature range in which the outdoor air temperature is 5 degree C or higher or -5 degrees or lower. In addition, since the amount of refrigerant that flows into the air heat exchanger 6 decreases as the rotation speeds of the compressors 1A and 1B decrease, the temperature of the air heat exchanger 6 is less likely to be 0 degrees C or lower and the amount of frost at the outdoor heat exchanger 5 also decreases.

By taking the above facts into account, the operation is performed using both the first and second heat exchangers 62 and 63 in the second temperature range. This configuration is made to extend a period of a heating operation by avoiding frequent switching into a defrosting operation in an outdoor air temperature range of -5 degrees C or lower at which a heating load is high. This configuration is made also to obtain a high heating capacity.

Referring next to Fig. 4, a difference between conventional operation control of a heat-pump hot-water supply apparatus and operation control of this invention will be described. The conventional operation control indicates operation control for the case where the heat exchanger portion of the air heat exchanger is not partitioned. When the air heat exchanger is frosted, the heat exchange efficiency decreases and the evaporating temperature decreases. In the case where it is determined whether to start a defrosting operation by using the evaporating temperature, a defrosting operation is started in response to such a decrease in the evaporating temperature.

In the case where the heat exchanger portion of the air heat exchanger is not partitioned, the frosted parts are distributed unevenly if the refrigerant distribution is uneven, and particularly the upper portion of the heat exchanger having a high airflow rate is more likely to be frosted. Consequently, the heat exchange efficiency of the upper portion of the air heat exchanger decreases as the operation duration extends, and the refrigerant fails to fully evaporate. Accordingly, control for closing the expansion valve is performed, and a defrosting operation is performed in a state where the heat transfer area of the heat exchanger is not efficiently usable.

In contrast, in the case where the heat exchanger portion is partitioned as in this invention, an operation is performed while controlling the position on which frost deposits and the amount of frost by intentionally causing the refrigerant to flow in descending order of the heat exchange efficiency of the air heat exchanger. Since the area of the air flow passage of the heat exchanger decreases as frosting advances, the portion of the heat exchanger having the highest airflow rate changes, and the position having the highest heat exchange efficiency changes. In the case where the heat exchanger portion is partitioned into upper and lower portions, the position having the highest heat exchange efficiency moves toward the lower side. Accordingly, an operation can be performed by sufficiently utilizing the heat transfer area while suppressing a decrease in the operation efficiency, and consequently, the operation interval up until a defrosting operation can be extended.

Control on the opening degree of the expansion valves and the rotation speed of the compressors according to this invention will be described next. The storage unit 40 stores a maximum expansion valve opening degree table (see Table 1) regarding the opening degree of the expansion valves 5A and 5B in relation to the outdoor air temperature and the water temperature 103. In this example, the outdoor air temperature is divided into outdoor-temperature ranges of 5 degrees C. As for the outdoor-air-temperature ranges, ranges obtained by dividing a range higher than or equal to -5 degrees C and lower than 5 degrees C, which are outdoor air temperatures that require a defrosting operation during a heating operation, are set as the first temperature range, and the rest of the ranges, that is, an outdoor air temperature range of 5 degrees C or above and an outdoor air temperature range below -5 degrees C, are set as the second temperature range.

**[Table 1]**

| | Evaporating temperature | | | | | | |
|---|---|---|---|---|---|---|---|
| Outdoor air temperature | -15< | -15 | -12 | -10 | -8 | -5 | <-5 |
| > 5 °C | 100 | 100 | 100 | 100 | 90 | 90 | 90 |
| 2 < ≤ 5 | 100 | 90 | 80 | 70 | 60 | 60 | 60 |
| 0 < ≤ 2 | 100 | 90 | 80 | 70 | 60 | 60 | 60 |
| -2 < ≤ 0 | 100 | 90 | 80 | 70 | 60 | 60 | 60 |
| -5 < ≤ -2 | 100 | 100 | 90 | 80 | 80 | 80 | 70 |

The controller obtains the refrigerant temperature at the outlet of the heat-extraction-side heat exchanger and the refrigerant pressure measured by the evaporating temperature pressure sensor 107 and performs calculation. The expansion valve 5A is controlled so that the calculated degree of superheat becomes equal to a degree-of-superheat target value stored in the storage unit 40.

When a difference between the refrigerant temperature at the outlet of the upper heat exchanger 62 and the evaporating temperature calculated by the evaporating temperature pressure sensor 107 is less than -5 degrees C, it is determined that heat exchange with air is no longer possible, and the expansion valve 5A is closed. At that time, the expansion valve 5B, which has been closed, is opened, and control for achieving the target degree of overheat is started.

The expansion valve 5A, which corresponds to a portion having a high heat exchange efficiency at the start of operation, activates, and the portion having a high heat exchange efficiency is covered with a large amount of frost. Since the frost covers spaces between fins and consequently narrows an air flow passage, air starts to flow into a portion having a low heat exchange efficiency, which corresponds to the expansion valve 5B for which the air flow has been small, and the heat exchange efficiency of the lower heat exchanger 63 corresponding to the expansion valve 5B, which has been the portion having a low heat exchange efficiency, improves. This change in the air flow improves the heat exchange efficiency and prevents a decrease in the operation efficiency. Similar control is performed on the expansion valves 5C and 5D.

As for the rotation speeds of the compressors 1A and 1B, the storage unit 40 stores a maximum compressor rotation speed table (see Table 2) in relation to the outdoor air temperature and the evaporating temperature. According to the maximum compressor rotation speed table illustrated in Table 2, the maximum permissible rotation speeds of the compressors 1A and 1B in the first temperature range is set in a range lower than or equal to 100 rps, which is the performance-limit rotation speeds of the compressors 1A and 1B in the case where the condensing pressure is lower than 3.8 MPa. The compressor rotation speed is reduced as the detection value of the evaporating pressure sensor 108 decreases in the first temperature range of the outdoor air temperature because of the following reason. It is considered that, as the evaporating pressure decreases, the capacity of the compressor becomes sufficiently larger than the capacity of the air heat exchanger. Accordingly, the compressor rotation speed is reduced to make the capacity of the compressor close to the capacity of the air heat exchanger. Since the amount of frost at the air heat exchanger 6 decreases as the compressor rotation speed decreases, it is considered that the amount of frost is less likely to reach the amount that requires frequent defrosting operation.

**[Table 2]**

| | Evaporating temperature | | | | | | |
|---|---|---|---|---|---|---|---|
| Outdoor air temperature | -15< | -15 | -12 | -10 | -8 | -5 | <-5 |
| 5 °C> | 90 | 90 | 90 | 95 | 95 | 95 | 100 |
| 2 < ≤ 5 | 85 | 85 | 90 | 95 | 95 | 100 | 100 |
| 0 < ≤ 2 | 80 | 85 | 90 | 95 | 100 | 100 | 100 |
| -2 < ≤ 0 | 85 | 85 | 95 | 100 | 100 | 100 | 100 |
| -5 < ≤ -2 | 90 | 95 | 100 | 100 | 100 | 100 | 100 |

Since it is considered that the amount of frost is small in the second temperature range, the rotation speeds of the compressors 1A and 1B is permitted to be increased to 100 rps, which is the performance limit, to make the water temperature reach a set temperature (water temperature) being the target as rapidly as possible in the maximum compressor rotation speed table of Table 2. Note that this maximum compressor rotation speed table is determined in advance by testing or other procedures.

On the other hand, in the maximum expansion valve opening degree table of Table 1, to control the amount of frost due to fluctuation or difference between products in a temperature range at which a large amount of frost deposits, the opening degree of the expansion valve is controlled not to be too large. Since an increase in the amount of frost is managed to be a certain value or less by controlling the maximum value of the flow rate of the refrigerant that flows into the air heat exchanger, it is considered that the amount of frost is less likely to reach an amount that requires frequent defrosting operations, even if the fluctuation or difference between the products occurs to some extent.

An operation of the heat-pump hot-water supply apparatus that stores the above-described maximum compressor rotation speed table and maximum expansion valve opening degree table in the storage unit 40 will be described below. When the hot-water supply apparatus starts a heating operation in response to a user operation on a device, such as a remote control, or a timer-triggered operation start instruction, the controller 30 determines whether the current condensing pressure detected by the pressure sensor 101 is lower than 3.85 MPa.

If the condensing pressure is lower than 3.85 MPa, the controller 30 determines whether the detection value of the outdoor air temperature sensor 107 is in the temperature range at which a large amount of frost deposits (first temperature range). In the case of the normal temperature range (second temperature range), the controller 30 extracts 100 rps, which is the performance-limit rotation speeds of the compressors 1A and 1B, and determines this to be the maximum permissible rotation speed. On the other hand, the opening degree of the expansion valve follows the normal maximum expansion valve opening degree stored in the storage unit 40.

The controller 30 then controls the rotation speeds of the compressors 1A and 1B within the maximum permissible rotation speed so that the water temperature measured at the outlet of the water heat exchanger 3 becomes equal to the target temperature. The controller 30 also controls the expansion valve opening degree on the basis of the detection value of the evaporating pressure sensor 108 and the refrigerant temperatures measured by the temperature sensors 106A, 106B, 106C, and 106D at the outlets of the heat-extracting heat exchangers each corresponding to one of the expansion valves. In this control, the difference between the recognized degree of overheat and a target value is decreased.

If the outdoor air temperature is in the first temperature range, the controller 30 recognizes the current evaporating pressure by using the evaporating pressure sensor 108 and determines the maximum permissible rotation speeds of the compressors 1A and 1B corresponding to this recognized evaporating pressure by referring to the maximum compressor rotation speed table of Table 2. The controller 30 then controls the rotation speeds of the compressors 1A and 1B within the maximum permissible rotation speed so that the water temperature at the outlet of the water heat exchanger 3 becomes equal to the target temperature.

In addition, the expansion valve opening degree is controlled in the following manner. The controller 30 recognizes the outdoor air temperature by using the outdoor air temperature sensor 107 and determines the maximum expansion valve opening degree in accordance with the maximum expansion valve opening degree table (see Table 1) stored in the storage unit 40. The controller 30 then controls the expansion valve opening degree to be less than or equal to the maximum expansion valve opening degree by using the evaporating pressure sensor 108 and the refrigerant temperatures measured by the temperature sensors 106A, 106B, 106C, and 106D at the outlets of the heat-extracting heat exchangers each corresponding to one of the expansion valves so that the difference between the recognized degree of overheat and the target value is decreased.

As described above, the heat-pump hot-water supply apparatus according to this invention controls the amount of extracted heat by partitioning a heat exchanger portion of an air heat exchanger and controlling a heat transfer area of the air heat exchanger in accordance with the detected outdoor air temperature. Accordingly, a decrease in the operation efficiency due to a decrease in the evaporating pressure and the amount of frost at the air heat exchanger are successfully suppressed by ensuring a heat transfer area suitable for the operating state of the hot-water supply apparatus, and an efficient operation of the heat-pump cycle apparatus can be performed.

In particular, at outdoor air temperatures at which a defrosting operation of the air heat exchanger is performed frequently during a heating operation, the maximum permissible rotation speed for suppressing the amount of frost at the air heat exchanger is set for the compressor, and the compressor is operated within this maximum permissible rotation speed. Accordingly, the frequency with which the defrosting operation is performed is decreases, and the heating operation can be performed with the evaporating pressure set as high as possible.

In addition, since the expansion valves are controlled within the maximum opening degree by setting the maximum expansion valve opening degree, a defect due to the fluctuation or difference caused in manufacturing of the apparatus is successfully suppressed. As a result, the heat-pump hot-water supply apparatus can operate more efficiently while performing the defrosting operation appropriately and suppressing the product variation. Reference Signs List

1A, 1B compressor 2A, 2B four-way valve 3 water heat exchanger 4 refrigerant tank 5A, 5B, 5C, 5D expansion valve 6, 7 air heat exchanger 8 accumulator 9 pump 10 refrigerant circuit 20 water circuit 30 controller 40 storage unit 101, 108 pressure sensor 102, 103, 104 temperature sensor 105A, 105B temperature sensor 106A-106D temperature sensor 107 outdoor air temperature sensor

## Claims

1. A heat-pump hot-water supply apparatus comprising:
a refrigerant circuit in which refrigerant compressed by a compressor (1A, 1B) and decompressed by expansion valves (5A, 5B) circulates through a closed circuit including an air heat exchanger (6) and a water heat exchanger (3) and in which a state of the refrigerant is repeatedly changed between liquid and gas by switching a circulating direction of the refrigerant by using four-way valves (2A, 2B);
a water circuit in which water pumped out by a pump (9) absorbs heat from the refrigerant at the water heat exchanger (3) to become hot water and then the hot water is supplied to a load; and
a controller (30) configured to control a rotation speed of the compressor (1A, 1B) and opening degrees of the expansion valves (5A, 5B),
wherein
the air heat exchanger (6) comprises a first heat exchanger (62) and a second heat exchanger (63), the first heat exchanger (62) being configured to allow a larger amount of air to pass through the first heat exchanger (62) than an amount of air to pass through the second heat exchanger (63), and
the expansion valves (5A, 5B) comprise a first expansion valve (5A) and a second expansion valve (5B), the first expansion valve (5A) being connected to the first heat exchanger (62), the second expansion valve (5B) being connected to the second heat exchanger (63), **characterized in that**
the controller (30) is configured to perform control to supply and stop supplying the refrigerant to the first heat exchanger (62) and the second heat exchanger (63) by opening and closing the first expansion valve (5A) and the second expansion valve (5B) to thereby regulate a position on which frost deposits and an amount of the frost at the air heat exchanger (6), and
the controller (30) is configured to control the opening degrees of the first expansion valve (5A) and the second expansion valve (5B) to
stop supplying the refrigerant to either one of the first heat exchanger (62) and the second heat exchanger (63) when the outdoor air temperature is in a first temperature range in which frosting is likely to occur, and
supply the refrigerant to both of the first heat exchanger (62) and the second heat exchanger (63) when the outdoor air temperature is in a second temperature range being different from the first temperature range.

2. The heat-pump hot-water supply apparatus of claim 1, wherein
the controller (30) is configured to supply the refrigerant to the first heat exchanger (62) and stop supplying the refrigerant to the second heat exchanger (63) in a case where an evaporating temperature is higher than or equal to a predetermined value, and
the controller (30) is configured to supply the refrigerant to the second heat exchanger (63) and stop supplying the refrigerant to the first heat exchanger (62) in a case where the evaporating temperature is lower than the predetermined value.

3. The heat-pump hot-water supply apparatus of claim 1 or 2, further comprising a storage unit (40) configured to store a first table representing a relationship among an outdoor air temperature, an evaporating temperature, and a maximum opening degree of the expansion valves (5A, 5B), wherein
the controller (30) is configured to control the opening degree of the expansion valves (5A, 5B) by using the first table read from the storage unit (40).

4. The heat-pump hot-water supply apparatus of claim 1 or 2, further comprising a storage unit (40) configured to store a second table representing a relationship among an outdoor air temperature, an evaporating temperature, and a maximum rotation speed of the compressor (1A, 1B), wherein
the controller (30) is configured to control rotation of the compressor (1A, 1B) by using the second table read from the storage unit (40).

5. The heat-pump hot-water supply apparatus of any one of claims 1 to 4, further comprising a blower fan (61) disposed above a casing having a rectangular parallelepiped shape, the first heat exchanger (62) being disposed in an upper portion of the casing, the second heat exchanger (63) being disposed in a lower portion of the casing.

## Patentansprüche

1. Warmwasserversorgungsvorrichtung mit Wärmepumpe, umfassend:
einen Kühlmittelkreislauf, worin ein durch einen Kompressor (1A, 1B) komprimiertes und durch Expansionsventile (5A, 5B) dekomprimiertes Kühlmittel durch einen geschlossenen Kreislauf zirkuliert, der einen Luftwärmetauscher (6) und einen Wasserwärmetauscher (3) umfasst, und worin ein Zustand des Kühlmittels zwischen Flüssigkeit und Gas durch Umschalten einer Zirkulationsrichtung des Kühlmittels durch Verwendung von Vier-Wege-Ventilen (2A, 2B) wiederholt geändert wird;
einen Wasserkreislauf, worin das durch eine Pumpe (9) herausgepumpte Wasser Wärme aus dem Kühlmittel am Wasserwärmetauscher (3) absorbiert, um sich in Warmwasser umzuwandeln und anschließend das Warmwasser einer Last zuzuführen; und
eine Steuerungseinheit (30), die konfiguriert ist, eine Rotationsgeschwindigkeit des Kompressors (1A, 1B) und Öffnungsgrade der Expansionsventile (5A, 5B) zu steuern,
worin der Luftwärmetauscher (6) einen ersten Wärmetauscher (62) und einen zweiten Wärmetauscher (63) umfasst, wobei der erste Wärmetauscher (62) konfiguriert ist zu bewirken, dass eine größere Luftmenge durch den ersten Wärmetauscher (62) hindurchtritt als eine Luftmenge, die durch den zweiten Wärmetauscher (63) hindurchtritt, und
worin die Expansionsventile (5A, 5B) ein erstes Expansionsventil (5A) und ein zweites Expansionsventil (5B) umfassen, wobei das erste Expansionsventil (5A) mit dem ersten Wärmetauscher (62) verbunden ist, das zweite Expansionsventil (5B) mit dem zweiten Wärmetauscher (63) verbunden ist, **dadurch gekennzeichnet, dass**
die Steuerungseinheit (30) konfiguriert ist, ein Steuern auszuführen, um das Kühlmittel dem ersten Wärmetauscher (62) und dem zweiten Wärmetauscher (63) zuzuführen, und das Zuführen des Kühlmittels zu stoppen, und zwar durch Öffnen und Schließen des ersten Expansionsventils (5A) und des zweiten Expansionsventils (5B), um dadurch eine Position, in der sich Reif ablagert, und eine Reifmenge am Luftwärmetauscher (6) zu regeln, und
die Steuerungseinheit (30) konfiguriert ist, die Öffnungsgrade des ersten Expansionsventils (5A) und des zweiten Expansionsventils (5B) zu steuern, um
das Zuführen des Kühlmittels an einen des ersten Wärmetauschers (62) und des zweiten Wärmetauschers (63) zu stoppen, wenn die Außenlufttemperatur in einem ersten Temperaturbereich liegt, in dem ein Auftreten von Reif wahrscheinlich ist, und
das Kühlmittel sowohl dem ersten Wärmetauscher (62) als auch dem zweiten Wärmetauscher (63) zuzuführen, wenn die Außenlufttemperatur in einem zweiten Temperaturbereich liegt, der sich vom ersten Temperaturbereich unterscheidet.

2. Warmwasserversorgungsvorrichtung mit Wärmepumpe nach Anspruch 1, worin
die Steuerungseinheit (30) konfiguriert ist, das Kühlmittel dem ersten Wärmetauscher (62) zuzuführen, und das Zuführen des Kühlmittels an den zweiten Wärmetauscher (63) dann zu stoppen, wenn eine Verdampfungstemperatur höher als oder gleich einem vorbestimmten Wert ist, und
die Steuerungseinheit (30) konfiguriert ist, das Kühlmittel dem zweiten Wärmetauscher (63) zuzuführen, und das Zuführen des Kühlmittels an den ersten Wärmetauscher (62) dann zu stoppen, wenn die Verdampfungstemperatur niedriger als der vorbestimmte Wert ist.

3. Wärmeversorgungsvorrichtung mit Wärmepumpe nach Anspruch 1 oder 2, ferner umfassend eine Speichereinheit (40), die konfiguriert ist, eine erste Tabelle zu speichern, die eine Beziehung zwischen einer Außenlufttemperatur, einer Verdampfungstemperatur und eines maximalen Öffnungsgrades der Expansionsventile (5A, 5B) repräsentiert, worin
die Steuerungseinheit (30) konfiguriert ist, den Öffnungsgrad der Expansionsventile (5A, 5B) durch Anwendung der aus der Speichereinheit (40) ausgelesenen, ersten Tabelle zu steuern.

4. Wärmewasservorrichtung mit Wärmepumpe nach Anspruch 1 oder 2, ferner umfassend eine Speichereinheit (40), die konfiguriert ist, eine zweite Tabelle zu speichern, die eine Beziehung zwischen einer Außenlufttemperatur, einer Verdampfungstemperatur und einer maximalen Rotationsgeschwindigkeit des Kompressors (1A, 1B) repräsentiert, worin
die Steuerungseinheit (30) konfiguriert ist, eine Rotation des Kompressors (1A, 1B) durch Anwendung der aus der Speichereinheit (40) ausgelesenen, zweiten Tabelle zu steuern.

5. Wärmewasservorrichtung mit Wärmepumpe nach Anspruch 1 oder 4, ferner umfassend einen Gebläseventilator (61), der oberhalb eines Gehäuses, das eine rechteckige Parallelepiped-Form aufweist, angeordnet ist, wobei der erste Wärmetauscher (62) in einem oberen Abschnitt des Gehäuses angeordnet ist, und der zweite Wärmetauscher (63) in einem unteren Abschnitt des Gehäuses angeordnet ist.

## Revendications

1. Appareil de fourniture d'eau chaude de pompe à chaleur comprenant :
un circuit de fluide frigorigène dans lequel un fluide frigorigène comprimé par un compresseur (1A, 1B) et détendu par des vannes de détente (5A, 5B) circule à travers un circuit fermé comprenant un échangeur de chaleur d'air (6) et un échangeur de chaleur d'eau (3) et dans lequel un état du fluide frigorigène est changé de manière répétée entre liquide et gaz en commutant la direction de circulation du fluide frigorigène en utilisant des vannes à quatre voies (2A, 2B) ;
un circuit d'eau dans lequel l'eau pompée par une pompe (9) absorbe la chaleur du fluide frigorigène au niveau de l'échangeur de chaleur d'eau (3) pour devenir de l'eau chaude et ensuite l'eau chaude est fournie à une charge ; et
un contrôleur (30) configuré pour commander une vitesse de rotation du compresseur (1A, 1B) et les degrés d'ouverture des vannes de détente (5A, 5B),
dans lequel
l'échangeur de chaleur d'air (6) comprend un premier échangeur de chaleur (62) et un deuxième échangeur de chaleur (63), le premier échangeur de chaleur (62) étant configuré pour permettre le passage à travers du premier échangeur de chaleur (62) d'une quantité d'air plus grande qu'une quantité d'air qui passe à travers le deuxième échangeur de chaleur (63), et
les vannes de détente (5A, 5B) comprennent une première vanne de détente (5A) et une deuxième vanne de détente (5B), la première vanne de détente (5A) étant reliée au premier échangeur de chaleur (62), la deuxième vanne de détente (5B) étant reliée au deuxième échangeur de chaleur (63), **caractérisé en ce que**
le contrôleur (30) est configuré pour effectuer une commande pour fournir et arrêter de fournir le fluide frigorigène au premier échangeur de chaleur (62) et au deuxième échangeur de chaleur (63) en ouvrant et en fermant la première vanne de détente (5A) et la deuxième vanne de détente (5B) pour, de ce fait, réguler une position à laquelle du givre se dépose et une quantité du givre au niveau de l'échangeur de chaleur d'air (6), et
le contrôleur (30) est configuré pour commander les degrés d'ouverture de la première vanne de détente (5A) et de la deuxième vanne de détente (5B) pour
arrêter la fourniture du fluide frigorigène à l'un ou l'autre du premier échangeur de chaleur (62) et du deuxième échangeur de chaleur (63) lorsque la température de l'air extérieur est dans une première plage de températures dans laquelle un givrage est susceptible de se produire, et
fournir le fluide frigorigène à la fois au premier échangeur de chaleur (62) et au deuxième échangeur de chaleur (63) lorsque la température de l'air extérieur est dans une deuxième plage de températures différente de la première plage de températures.

2. Appareil de fourniture d'eau chaude de pompe à chaleur selon la revendication 1, dans lequel
le contrôleur (30) est configuré pour fournir le fluide frigorigène au premier échangeur de chaleur (62) et arrêter la fourniture du fluide frigorigène au deuxième échangeur de chaleur (63) dans un cas dans lequel une température d'évaporation est supérieure ou égale à une valeur prédéterminée, et
le contrôleur (30) est configuré pour fournir le fluide frigorigène au deuxième échangeur de chaleur (63) et arrêter la fourniture du fluide frigorigène au premier échangeur de chaleur (62) dans un cas dans lequel la température d'évaporation est inférieure à la valeur prédéterminée.

3. Appareil de fourniture d'eau chaude de pompe à chaleur selon la revendication 1 ou 2, comprenant en outre une unité de mémorisation (40) configurée pour mémoriser une première table représentant une relation entre une température de l'air extérieur, une température d'évaporation, et un degré d'ouverture maximum des vannes de détente (5A, 5B), dans lequel
le contrôleur (30) est configuré pour commander le degré d'ouverture des vannes de détente (5A, 5B) en utilisant la première table lue dans l'unité de mémorisation (40).

4. Appareil de fourniture d'eau chaude de pompe à chaleur selon la revendication 1 ou 2, comprenant en outre une unité de mémorisation (40) configurée pour mémoriser une deuxième table représentant une relation entre une température de l'air extérieur, une température d'évaporation, et une vitesse de rotation maximum du compresseur (1A, 1B), dans lequel
le contrôleur (30) est configuré pour commander la rotation du compresseur (1A, 1B) en utilisant la deuxième table lue dans l'unité de mémorisation (40).

5. Appareil de fourniture d'eau chaude de pompe à chaleur selon l'une quelconque des revendications 1 à 4, comprenant en outre un ventilateur souffleur (61) disposé au-dessus d'un carter ayant une forme de parallélépipède rectangulaire, le premier échangeur de chaleur (62) étant disposé dans une partie supérieure du carter, le deuxième échangeur de chaleur (63) étant disposé dans une partie inférieure du carter.
